(19) Europäisches Patentamt
European Patent Office
Office européen des brevets

(11) **EP 2 893 054 B1**

(12) **EUROPÄISCHE PATENTSCHRIFT**

(45) Veröffentlichungstag und Bekanntmachung des Hinweises auf die Patenterteilung:
**25.05.2016  Patentblatt 2016/21**

(21) Anmeldenummer: **13753852.6**

(22) Anmeldetag: **23.08.2013**

(51) Int Cl.:
*C23C 22/34* (2006.01)          *C23C 22/60* (2006.01)
*C23C 22/66* (2006.01)          *C23C 22/73* (2006.01)
*C23C 22/77* (2006.01)          *C23C 22/83* (2006.01)
*C23C 22/86* (2006.01)          *C23G 1/22* (2006.01)
*C23G 1/36* (2006.01)          *B05D 7/14* (2006.01)
*G05D 21/00* (2006.01)

(86) Internationale Anmeldenummer:
**PCT/EP2013/067542**

(87) Internationale Veröffentlichungsnummer:
**WO 2014/037234 (13.03.2014 Gazette 2014/11)**

(54) **VERFAHREN ZUR KORROSIONSSCHÜTZENDEN OBERFLÄCHENBEHANDLUNG VON METALLISCHEN BAUTEILEN IN SERIE**

METHOD FOR CORROSION-PROTECTIVE SERIAL SURFACE TREATMENT OF METALLIC COMPONENTS

PROCÉDÉ DE TRAITEMENT DE SURFACE ANTICORROSION D'ÉLÉMENTS MÉTALLIQUES EN SÉRIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.09.2012  DE 102012215679**

(43) Veröffentlichungstag der Anmeldung:
**15.07.2015  Patentblatt 2015/29**

(73) Patentinhaber: **Henkel AG & Co. KGaA**
**40589 Düsseldorf (DE)**

(72) Erfinder:
• **BROUWER, Jan-Willem**
**47877 Willich (DE)**
• **PILAREK, Frank-Oliver**
**50931 Köln (DE)**
• **LILL, Kirsten Agnes**
**40215 Düsseldorf (DE)**
• **RESANO ARTALEJO, Fernando Jose**
**40597 Düsseldorf (DE)**
• **HENZE, Natascha**
**51375 Leverkusen (DE)**

(56) Entgegenhaltungen:
EP-A1- 1 550 740          EP-A2- 0 434 358
WO-A1-00/09780          WO-A1-99/07917
DE-A1- 10 010 758

**Beschreibung**

Die vorliegende Erfindung betrifft ein Verfahren zur seriellen Oberflächenbehandlung von metallischen Bauteilen umfassend Aluminiumoberflächen, bei dem auf eine alkalische Vorbehandlung eine Konversionsbehandlung folgt. Erfindungsgemäß wird dabei in der alkalischen Vorbehandlung darauf abgestellt, dass ein Maximalwert für die Konzentration an gelöstem Zink nicht überschritten wird, um nach erfolgter Oberflächenbehandlung eine hinreichende Qualität des vor Korrosion schützenden Überzugs auf den Aluminiumoberflächen der Bauteile sicherzustellen. In einem bevorzugten Verfahren wird der Anteil an gelöstem Zink durch Zudosierung von Verbindungen, die eine Quelle für Sulfid-Ionen darstellen, effektiv unterhalb des jeweils badtypischen Maximalwertes an gelöstem Zink gehalten. Zusätzlich kann die Funktionalität der Oberflächenbehandlung dadurch erhöht werden, dass der Anteil an gelöstem Aluminium in der alkalischen Vorbehandlung ebenfalls so kontrolliert wird, dass ein Schwellenwert für gelöstes Aluminium durch Zudosierung von Verbindungen, die eine Quelle für Silikat-Anionen darstellen, nicht überschritten wird.

Die Reinigung und Oberflächenkonditionierung von Metallteilen vor ihrer Weiterverarbeitung stellt eine Standardaufgabe in der metallverarbeitenden Industrie dar. Die Metallteile können beispielsweise mit Pigmentschmutz, Staub, Metallabrieb, Korrosionsschutzölen, Kühlschmierstoffen oder Umformhilfsmitteln verschmutzt sein. Vor der Weiterverarbeitung, wie insbesondere vor einer Korrosionsschutzbehandlung (z.B. Phosphatierung, Chromatierung, Reaktion mit komplexen Fluoriden usw.) müssen diese Verunreinigungen durch eine geeignete Reinigerlösung entfernt werden. Die Reinigung soll darüber hinaus die Aufgabe erfüllen, dass die Metalloberflächen für die nachfolgende Korrosionsschutzbehandlung vorkonditioniert werden. Die Vorkonditionierung ist eine Art der Aktivierung der Metalloberflächen, die insbesondere bei einer nachfolgenden nasschemischen Konversionsbehandlung zu homogenen anorganischen vor Korrosion schützenden Überzügen mit ausreichender Schichtdicke führt. Eine solche Vorkonditionierung oder Aktivierung wird durch einen Beizprozess eingeleitet und kann darüber hinaus die Belegung der Metalloberflächen mit metallischen Fremdelementen umfassen. Eine im Stand der Technik bekannte Vorkonditionierung, die bei nachfolgender Konversionsbehandlung eine Verbesserung der Korrosionsschutzeigenschaften herbeiführt, ist beispielsweise die alkalische Vereisung von verzinktem Stahl, die in der DE 102010001686 ausführlich beschrieben ist.

Die industriellen Reiniger oder Aktivierungsbäder wie die zuvor genannte Vereisung sind als nasschemische Vorbehandlung vor einer Konversionsbehandlung in der Regel alkalisch eingestellt und weisen pH-Werte im Bereich oberhalb von 7, beispielsweise 9 bis 12 auf. Ihre Grundbestandteile sind Alkalien sowie nichtionische und/oder anionische Tenside. Häufig enthalten die Reiniger als zusätzliche Hilfskomponenten Komplexbildner.

Die Alkalien in diesen Bädern tragen beispielsweise zu dessen Reinigungsvermögen bei, in dem sie Verunreinigungen wie Fette verseifen und wasserlöslich machen, oder zur Oberflächenaktivierung, indem sie die metallischen Oberflächen anbeizen. Durch derartige Reaktionen, ggf. auch durch Ausschleppung, wird Alkalinität verbraucht, so dass die Reinigungswirkung bei einer Oberflächenbehandlung von Bauteilen in Serie mit der Zeit nachlässt. Daher ist es üblich, die Alkalinität der Reinigungsbäder zu bestimmten Zeiten zu überprüfen und erforderlichenfalls die Lösung mit neuen Wirkstoffen zu ergänzen oder ganz zu erneuern. Ein solches Verfahren zur Auffrischung der Alkalinität ist in der EP 1051672 beschrieben. Ähnliches gilt bei der alkalischen Vereisung von metallischen Bauteilen in Serie für die sich verbrauchenden oder aus dem Bad ausgeschleppten Eisen(III)-Ionen und Komplexbildner.

Die Pflege von Reinigungs-, Aktivierungs- und Konversionsbädern bei industriellen Verfahren zur Oberflächenbehandlung metallischer Bauteile in Serie ist demnach für die Gewährleistung einer gleich bleibenden Funktionalität und Güte unverzichtbar. Dennoch zeigt sich bei der seriellen Oberflächenbehandlung von metallischen Bauteilen umfassend eine nasschemische alkalische Vorbehandlung und eine nachfolgende Konversionsbehandlung, dass allein die Auffrischung des Gehaltes an Wirkkomponenten der Einzelbäder zumeist nicht ausreicht, um die Funktionalität und Güte des Gesamtprozesses dauerhaft aufrecht zu erhalten. So wird bei einer derartigen Oberflächenbehandlung von metallischen Bauteilen in Serie häufig festgestellt, dass eine Verschlechterung der Filiform-Korrosion auf den Oberflächen von Aluminium nach einer gewissen Betriebszeit der Anlage eintritt, der nur unzureichend durch Zudosierung von Wirkkomponenten entgegengewirkt werden kann.

Aufgabe der vorliegenden Erfindung ist es daher, die Verfahren zur nasschemischen Oberflächenbehandlung von metallischen Bauteilen in Serie umfassend Oberflächen von Aluminium, bei denen in einem ersten Schritt eine alkalische Vorbehandlung und nachfolgend eine Konversionsbehandlung der Bauteile erfolgt, hinsichtlich der Güte des Korrosionsschutzes auf den Aluminiumoberflächen zu stabilisieren, wobei die alkalische Vorbehandlung bezüglich ihrer Alkalinität geeignet sein muss, eine Basis für herkömmliche Reiniger- und Aktivierungsbäder von metallischen Bauteilen aus Zink, und/oder Aluminium zu bilden.

Diese Aufgabe wird gelöst durch ein Verfahren zur nasschemischen Oberflächenbehandlung von metallischen Bauteilen in Serie, bei dem sowohl metallische Bauteile, die Oberflächen von Aluminium, als auch Bauteile, die Oberflächen von Zink aufweisen, durch In-Kontakt-Bringen mit einer alkalischen Badlösung, die in einem Systemtank bevorratet wird, nasschemisch vorbehandelt werden und anschließend nass-in-nass eine Konversionsbehandlung zumindest der Oberflächen von Aluminium der metallischen Bauteile erfolgt, wobei der pH-Wert der alkalischen Badlösung in der nasschemischen Vorbehandlung größer als 10 ist und die freie Alkalinität zumindest 0,5 Punkte, aber weniger als 50 Punkte beträgt, wobei folgender Maximalwert $Zn_{max}$ für die Konzentration an gelöstem Zink in der alkalischen Badlösung des Systemtanks nicht überschritten wird:

$$Zn_{max} = 0,0004 \times (pH - 9) \times [FA] + 0,6 \times [Y]$$

pH: pH-Wert
$Zn_{max}$: Maximalwert für die Konzentration an gelöstem Zink in mmol/l
[FA]: freie Alkalität in mmol/l,
[Y]: Konzentration in mmol/l von Komplexbildnern Y in Form wasserlöslicher kondensierter Phosphate berechnet als $P_2O_6$ und/oder in Form wasserlöslicher organischer Verbindungen, die zumindest eine funktionale Gruppe ausgewählt aus $-COOX_{1/n}$, $-OPO_3X_{2/n}$ und/oder $-PO_3X_{2/n}$ aufweisen, wobei X entweder ein Wasserstoffatom oder ein Alkali- und/oder Erdalkalimetall-Atom mit der jeweiligen Wertigkeit n darstellt

Verbindungen sind im Sinne der vorliegenden Erfindung wasserlöslich, wenn ihre Löslichkeit in entionisiertem Wasser mit einer Leitfähigkeit von nicht mehr als 1 $\mu Scm^{-1}$ bei einer Temperatur von 20 °C zumindest 1 g/l beträgt.

Die freie Alkalität der alkalischen Badlösung in der nasschemischen Vorbehandlung des erfindungsgemäßen Verfahrens wird bestimmt durch Titration von 10 ml der Badlösung mit 0,1 n Natronlauge bis zu einem pH-Wert von 8,5. Der pH-Wert wird dabei potentiometrisch mit einer kalibrierten Glaselektrode bestimmt. Das Volumen des hinzugegebenen Titranten in Millilitern entspricht dann der Punktzahl der freien Alkalität der Badlösung. Diese Punktzahl multipliziert mit dem Faktor 10 entspricht wiederum der freien Alkalität in Millimol pro Liter.

Als Oberflächenbehandlung in Serie gilt erfindungsgemäß das In-Kontakt-Bringen einer Vielzahl von metallischen Bauteilen mit der in dem Systemtank bevorrateten alkalischen Badlösung zur nasschemischen Vorbehandlung, ohne dass nach jeder Vorbehandlung eines einzelnen metallischen Bauteils ein vollständiger Austausch mit Neuansatz der alkalischen Badlösung des Systemtanks erfolgt.

In diesem Zusammenhang sind solche erfindungsgemäßen Verfahren zur Oberflächenbehandlung in Serie bevorzugt, bei denen die nasschemische Oberflächenbehandlung der metallischen Bauteile in Serie zumindest für eine solche Anzahl metallischer Bauteile erfolgt, dass eine Gesamtfläche allein an Zinkoberflächen der metallischen Bauteile in Quadratmetern mit der alkalischen Badlösung des Systemtanks nasschemisch vorbehandelt wird, die größer ist als folgender Term:

$$\frac{V_B \times Zn_{max} \times M_{Zn}}{\Delta m_{Zn}}$$

$V_B$: Badvolumen in $m^3$
$Zn_{max}$: Maximalkonzentration an gelöstem Zink in mmol/l
$M_{Zn}$: Molmasse von Zink in g/mol
$Am_{Zn}$: flächennormierter Beizabtrag bezogen auf die Zinkoberflächen der metallischen Bauteile in $g/m^2$

Diese Anzahl entspricht gerade der theoretisch erforderlichen Anzahl an metallischen Bauteilen, die es bei serieller Vorbehandlung vermag, die Maximalkonzentration $Zn_{max}$ an gelösten Zink in der alkalischen Badlösung durch den Beizabtrag von den Zinkoberflächen der Bauteile überschreiten zu lassen.

Wird also das Badvolumen des Systemtanks enthaltend die alkalische Badlösung vollständig ausgetauscht, und damit die Serie unterbrochen, bevor die sich entsprechend der zuvor genannten Gleichung berechnende Gesamtfläche an Zinkoberflächen behandelt wurde, kann die Maximalkonzentration $Zn_{max}$ an gelöstem Zink in der alkalischen Badlösung allein durch Beizprozesse nicht überschritten werden. Dies gilt selbstverständlich nur, wenn zu Beginn der Serie nicht bereits gelöstes Zink in der alkalischen Badlösung enthalten ist.

Als Systemtank wird erfindungsgemäß ein Behältnis verstanden, das eine Badlösung zum In-Kontakt-Bringen mit den metallischen Bauteilen bevorratet. Das metallische Bauteil kann dabei zum In-Kontakt-Bringen mit der Badlösung durch einen solchen Systemtank tauchend hindurchgeführt werden oder es wird zumindest ein Teil der Badlösung zum In-Kontakt-Bringen mit dem metallischen Bauteil aus dem Systemtank temporär herausgespeist, um nach dem In-Kontakt-Bringen, beispielsweise nach Sprühapplikation, zumindest teilweise wieder in den Systemtank zurückgespeist zu werden.

Erfindungsgemäß werden die aufeinander folgenden nasschemischen Prozessschritte Vorbehandlung und Konversionsbehandlung nass-in-nass durchgeführt. Dies bedeutet, dass zwischen Vorbehandlung und Konversionsbehandlung kein Trocknungsschritt erfolgt, bei dem unter Zuhilfenahme technischer Maßnahmen, beispielsweise Erhöhung der Temperatur oder Einstellen eines gerichteten Luftstroms, eine Trocknung des Nassfilms auf den Bauteilen herbeigeführt werden soll. In einem solchen Trocknungsschritt tritt in der Regel eine Reoxidation der Metalloberflächen auf, die die durch die alkalische Badlösung erzielte Aktivierung der Metalloberflächen teilweise aufhebt. Ein Antrocknen von auf den metallischen Bauteilen anhaftenden Nassfilmen aus der Vorbehandlung oder aus einem nachfolgenden Spülschritt beim Transport der metallischen Bauteile zur Konversionsbehandlungsstufe, beispielsweise aufgrund eines temporären Anlagenstillstands, ist jedoch unschädlich für das erfindungsgemäße Verfahren.

Im erfindungsgemäßen Verfahren umfassend eine Vorbehandlung mit alkalischer Badlösung und eine nachfolgende Konversionsbehandlung wird gewährleistet, dass die Ausbildung einer qualitativ hochwertigen Korrosionsschutzschicht bei der Oberflächenbehandlung in einer Serie, innerhalb der sowohl Bauteile mit Zinkoberflächen und Bauteile mit Aluminiumoberflächen als auch Bauteile in Mischbauweise behandelt werden, die Zink- und Aluminiumoberflächen aufweisen, aufrecht erhalten wird. Dies gilt insbesondere für die Aufrechterhaltung der Qualität der vor Korrosion schützenden Beschichtung auf den Oberflächen des Bauteils, die Oberflächen von Aluminium sind. Überraschenderweise hat sich gezeigt, dass hierfür insbesondere die Konzentration an gelöstem Zink in alkalischen Badlösungen nach der Art der vorliegenden Erfindung ausschlaggebend ist und damit zu einer zu kontrollierenden Steuergröße in der erfindungsgemäßen Oberflächenbehandlung wird. So unterbleibt bei Überschreiten einer Maximalkonzentration $Zn_{max}$ an gelöstem Zink eine hinreichende Aktivierung der Aluminiumoberflächen der Bauteile in der Vorbehandlung, was sich nachteilig auf die Konversionsschichtbildung auswirkt.

Vorzugsweise wird das erfindungsgemäße Verfahren so durchgeführt, dass der Maximalwert $Zn_{max}$ an gelöstem Zink in der alkalischen Badlösung folgenden Wert nicht überschreitet:

$$Zn_{max} = 0,0004 \times (pH - 9) \times [FA] + 0,5 \times [Y]$$

pH:          pH-Wert
$Zn_{max}$:     Maximalwert für die Konzentration an gelöstem Zink in mmol/l
[FA]:        freie Alkalinität in mmol/l,
[Y]:         Gesamtkonzentration in mmol/l von Komplexbildnern Y in Form wasserlöslicher kondensierter Phosphate berechnet als $P_2O_6$ und/oder in Form wasserlöslicher organischer Verbindungen, die zumindest eine funktionale Gruppe ausgewählt aus $-COOX_{1/n}$, $-OPO_3X_{2/n}$

und/oder $-PO_3X_{2/n}$ aufweisen, wobei X entweder ein Wasserstoffatom oder ein Alkali- und/oder Erdalkalimetall-Atom mit der jeweiligen Wertigkeit n darstellt

Der Maximalwert $Zn_{max}$ an gelöstem Zink ist in erfindungsgemäßen Verfahren von der Alkalinität der nasschemischen Vorbehandlung und in ausgeprägtem Maße von der Konzentration spezifischer Komplexbildnern Y abhängig. In Gegenwart dieser Komplexbildner Y erhöht sich die Toleranz gegenüber gelöstem Zink proportional zur deren Konzentration. Die Anwesenheit von Komplexbildnern Y ist daher in alkalischen Badlösungen der Vorbehandlung in erfindungsgemäßen Verfahren bevorzugt. Besonders bevorzugt sind die Komplexbildner Y in einer Gesamtkonzentration von mindestens 0,5 mmol/l, insbesondere bevorzugt in einer Gesamtkonzentration von mindestens 5 mmol/l, jedoch aus wirtschaftlichen Gründen in einer Gesamtkonzentration von vorzugsweise nicht mehr als 100 mmol/l, besonders bevorzugt von nicht mehr als 80 mmol/l enthalten.

Geeignete Komplexbildner Y in Form organischer Verbindungen sind in der alkalischen Badlösung der nasschemischen Vorbehandlung des erfindungsgemäßen Verfahrens vorzugsweise ausgewählt aus α-, β- und/oder y -Hydroxycarbonsäuren mit nicht mehr als 10 Kohlenstoffatomen, 1-Hydroxyethan-1,1-Diphosphonsäure, [(2-Hydroxyethyl)(phosphonomethyl)amino]-methylphosphonsäure, Diethylenetriaminpentakis(methylenphosphonsäure) und/oder Amino-tris-(methylenphosphonsäure).

Es hat sich gezeigt, dass insbesondere solche organischen Komplexbildner Y für eine stabile Maximalkonzentration $Zn_{max}$ als Obergrenze für gelöstes Zink sorgen, die ausgewählt sind aus wasserlöslichen organischen Verbindungen, die zumindest eine funktionale Gruppe ausgewählt aus $-OPO_3X_{2/n}$ und/oder $-PO_3X_{2/n}$ aufweisen, wobei X entweder ein Wasserstoffatom oder ein Alkali- und/oder Erdalkalimetall-Atom mit der jeweiligen Wertigkeit n darstellt. Diese organischen Komplexbildner sind daher in erfindungsgemäßen Verfahren bevorzugt. Weiterhin bevorzugt ist in diesem Zusammenhang, dass die organischen Komplexbildner Y ausgewählt sind aus wasserlöslichen organischen Verbindungen, die zumindest zwei solche funktionale Gruppen ausgewählt aus $-OPO_3X_{2/n}$ und/oder $-PO_3X_{2/n}$ aufweisen und vorzugsweise zusätzlich in α- oder β-Stellung zu einer $-OPO_3X_{2/n}$ und/oder $-PO_3X_{2/n}$ Funktionalität eine Amino-, Hydroxyl- oder Carboxyl-Gruppe enthalten, beispielsweise 1-Hydroxyethan-1,1-Diphosphonsäure, [(2-Hydroxyethyl)(phosphonomethyl)amino]-methylphosphonsäure, Diethylenetriaminpentakis(methylenphosphonsäure) und/oder Amino-tris-(methylenphosphonsäure).

Insgesamt ist bevorzugt, dass die organischen Komplexbildner Y keine polymeren Verbindungen sind, so dass deren Molmasse vorzugsweise kleiner als 500 g/mol ist.

Als Komplexbilder Y, die wasserlösliche kondensierte Phosphate darstellen, sind in der alkalischen Badlösung der nasschemischen Vorbehandlung des erfindungsgemäßen Verfahrens Pyrophosphate, Triphosphate und/oder Polyphosphate bevorzugt, deren Konzentration in mol/l im Rahmen der vorliegenden Erfindung stets bezogen auf die theoretische Struktureinheit $P_2O_6$ zu berechnen ist. Demnach entsprechen 1 mol eines Triphosphat-Anions 1,5 mol $P_2O_6$ und damit 1,5 mol an Komplexbildner Y.

Zur Einstellung der Alkalinität in der Badlösung der nasschemischen Vorbehandlung werden die im Stand der Technik üblichen Wirkkomponenten eingesetzt. Derartige Wirkkomponenten sind alkalisch reagierende Substanzen und vorzugsweise ausgewählt aus Alkalimetallhydroxiden, Alkalimetallcarbonaten, Alkalimetallphosphaten und organischen Aminen, insbesondere Alkanolaminen.

Es ist häufig notwendig, dass die alkalische Badlösung in der nasschemischen Vorbehandlung des erfindungsgemäßen Verfahrens zusätzlich oberflächenaktive Substanzen enthält, die die Metalloberflächen der metallischen Bauteile von organischen Verunreinigungen befreien, um so einen gleichmäßigen Beizangriff auf den jeweiligen Metalloberflächen zu ermöglichen. In einer bevorzugten Ausführungsform des erfindungsgemäßen Verfahrens sind daher in der alkalischen Badlösung zusätzlich 0,01-10 g/l an nichtionischen Tensiden enthalten. Als nichtionische Tenside sind dann vorzugsweise Ethoxylate, Propoxylate und/oder Ethoxylate/Propoxylate von Alkoholen oder Alkylaminen mit 6 bis 16 C-Atomen im Alkylrest, die auch endgruppenverschlossen sein können, enthalten.

Um eine hinreichende Aktivierung der Aluminiumoberflächen der in Serie nach einem erfindungsgemäßen Verfahren oberflächenbehandelten metallischen Bauteile sicherzustellen, ist es bevorzugt, wenn die alkalische Badlösung in der nasschemischen Vorbehandlung insgesamt weniger als 100 mg/l, besonders bevorzugt insgesamt weniger als 50 mg/l, insbesondere bevorzugt weniger als 10 mg/l an wasserlöslichen Silikaten und Boraten enthält.

Sollen im erfindungsgemäßen Verfahren auch metallische Bauteile aus verzinktem Bandstahl oder metallische Bauteile in Mischbauweise, die neben Aluminiumoberflächen auch verzinkte Stahloberflächen aufweisen, in Serie nasschemisch oberflächenbehandelt werden, so ist für einen optimalen Kantenkorrosionsschutz bevorzugt, dass die nasschemische Vorbehandlung mit einer alkalischen Badlösung erfolgt, die eine Vereisenung der Zinkoberflächen gemäß der DE 102010001686 bewirkt und zu diesem Zweck zusätzlich zumindest 50 mg/l, besonders bevorzugt zumindest 100 mg/l an gelöstem Eisen, vorzugsweise in Form von Eisen(III)-Ionen, enthält. Ein diesbezüglich besonders bevorzugtes erfindungsgemäßes Verfahren enthält in der alkalischen Badlösung der nasschemischen Vorbehandlung:

a) 0,05-2 g/l an Eisen(III)-Ionen,
b) 0,1-4 g/l an Phosphat-Ionen,
c) zumindest 0,1 g/l an Komplexbildnern Y ausgewählt aus organischen Verbindungen c1), die zumindest eine funktionale Gruppe ausgewählt aus $COOX_{1/n}$, $-OPO_3X_{2/n}$ und/oder $-PO_3X_{2/n}$ aufweisen, wobei X entweder ein Wasserstoffatom oder ein Alkali- und/oder Erdalkalimetall-Atom mit der jeweiligen Wertigkeit n darstellt, und/oder aus kondensierten Phosphaten c2) berechnet als $PO_4$,
d) insgesamt 0,01-10 g/l an nichtionischen Tensiden,
e) insgesamt weniger als 10 mg/l an ionischen Verbindungen der Metalle Nickel, Cobalt, Mangan, Molybdän, Chrom und/oder Cer, insbesondere weniger als 1 mg/l an ionischen Verbindungen der Metalle Nickel und/oder Cobalt,

wobei nicht mehr als 10 g/l an kondensierten Phosphaten berechnet als $PO_4$ enthalten sind und das molare Verhältnis der Summe der Komponenten c1) und c2) zu Eisen(111)-Ionen größer als 1 : 1 ist.

Erfolgt vor der Konversionsbehandlung der metallischen Bauteile eine Vereisenung der Zinkoberflächen, ist ein erfindungsgemäßes Verfahren, bei dem gelöstes Zink kontinuierlich oder diskontinuierlich aus der alkalischen Badlösung, die dann eine Lösung zur Vereisenung ist, entfernt wird, besonders wertvoll, da in einer derartigen alkalischen Badlösung ein vergleichsweise hoher Beizabtrag von den Zinkoberflächen resultiert. Dies bedingt zwangsläufig, dass bei serieller Oberflächenbehandlung der Anteil an gelöstem Zink im Systemtank der Vorbehandlung besonders rasch den kritischen Maximalwert überschreitet, wenn keine technischen Maßnahmen zur Entfernung von gelöstem Zink eingeleitet werden.

Unabhängig von der genauen Zusammensetzung der alkalischen Badlösung der nasschemischen Vorbehandlung resultiert ein erheblicher Beizabtrag von den Zinkoberflächen der Bauteile. Dieser Beizabtrag bei der erfindungsgemäßen Oberflächenbehandlung in Serie führt dazu, dass ein hoher stationärer Anteil an gelöstem Zink im Systemtank der nasschemischen Vorbehandlung vorliegt oder aufgebaut wird.

Eine erfindungsgemäße Verfahrensführung erfordert daher üblicherweise technische Maßnahmen zur Entfernung oder Reduktion des Anteils an gelöstem Zink in der Badlösung des Systemtanks, um einen optimalen Korrosionsschutz nach erfolgter Konversionsbehandlung dauerhaft sicherzustellen. In einem bevorzugten erfindungsgemäßen Verfahren wird daher ein Überschreiten des Maximalwerts $Zn_{max}$ des Anteils an gelöstem Zink in der nasschemischen Vorbehandlung dadurch verhindert, dass aus der alkalischen Badlösung des Systemtanks kontinuierlich oder diskontinuierlich gelöstes Zink entfernt wird, wobei dies nicht allein dadurch geschieht, dass zumindest ein Teil der alkalischen Badlösung des Systemtanks enthaltend gelöstes Zink verworfen und ein anderer Teil einer alkalischen Lösung, der lediglich die Wirkkomponenten der alkalischen Badlösung enthält, dem Systemtank hinzugefügt wird.

Unter Wirkkomponenten werden in diesem Zusammenhang ausschließlich Komponenten verstanden, die wesentlich zur Einstellung der Alkalinität der Badlösung sind oder die eine signifikante Oberflächenbelegung der behandelten Bauteile mit Fremdelementen oder chemischen Verbindungen bewirken und sich dadurch verbrauchen. Eine signifikante Oberflächenbelegung liegt beispielsweise vor, wenn der Anteil an Fremdelementen auf den Metalloberflächen oder der Anteil an chemischen Verbindungen durchschnittlich größer als 10 mg/m$^2$ ist. Dies ist beispielsweise dann der Fall, wenn wie in der alkalischen Vereisung gemäß der DE 102010001686 nach erfolgter nasschemischer Vorbehandlung eine Oberflächenbelegung oberhalb von 10 mg/m$^2$ bezogen auf das Fremdelement Eisen resultiert, so dass Eisen(III)-Ionen in einer solchen alkalischen Vorbehandlung eine Wirkkomponente darstellen. Ähnliches kann für Korrosionsinhibitoren gelten, die eine hohe Affinität zu den zu behandelnden Metalloberflächen aufweisen und so eine entsprechende Oberflächenbelegung hervorrufen können.

Die Entfernung von gelöstem Zink aus der alkalischen Badlösung zur Einhaltung des erfindungsgemäßen Maximalwertes $Zn_{max}$ erfolgt demnach bevorzugt nicht allein durch den Ausgleich von Ausschleppungs- oder Verdampfungsverlusten im Systemtank durch Zugabe wässriger Lösungen, die lediglich die Wirkkomponenten der alkalischen Badlösung des Systemtanks und Badvolumen substituieren. Ein solches Verfahren zur Reduzierung der Anteile an gelöstem Zink wäre zum einen äußerst unwirtschaftlich und zum anderen nicht geeignet für eine effektive Steuerung des Anteils an gelöstem Zink in der Vorbehandlung, da entweder die Reduktion des Zinkanteils unter den Maximalwert $Zn_{max}$ oder die bedarfsgenaue Auffrischung der Wirkkomponenten verfahrenstechnisch priorisiert werden müsste.

Vorzugsweise erfolgt die Entfernung von gelöstem Zink aus der alkalischen Badlösung der nasschemischen Vorbehandlung in einem erfindungsgemäßen Verfahren daher dadurch, dass zumindest ein Teil der alkalischen Badlösung des Systemtanks mit einer wasserlöslichen Verbindung, die eine Quelle für Sulfid-Ionen darstellt, versetzt wird und ein sich in diesem Teil der alkalischen Badlösung bildender Niederschlag gegebenenfalls durch Filtration oder andere Trennungsmethoden von der alkalischen Badlösung getrennt wird.

Ein solches bevorzugtes Verfahren erbringt den Vorteil, dass in der alkalischen Badlösung der nasschemischen Vorbehandlung gelöstes Zink selektiv in ungelöstes Zinksulfid umgewandelt wird. Damit werden weder Wirkkomponenten aus der Badlösung entfernt noch Badlösung verworfen, da das Reaktionsprodukt Zinksulfid als Feststoff in einer Form vorliegt, die nunmehr unschädlich für eine hinreichende Aktivierung der Aluminiumoberflächen in der Vorbehandlung ist. Das Reaktionsprodukt Zinksulfid kann daher entweder in der alkalischen Badlösung belassen werden oder gegebenenfalls als Fällungsprodukt zur Vermeidung von Sedimentbildung durch Filtration von der Badlösung getrennt werden.

In einer bevorzugten Ausführungsform des erfindungsgemäßen Verfahrens, bei dem der alkalischen Badlösung kontinuierlich oder diskontinuierlich gelöstes Zink durch Zudosierung einer Sulfid-Ionen freisetzenden Verbindung entfernt wird, wird der Teil der alkalischen Badlösung des Systemtanks, der mit der wasserlöslichen Verbindung, die eine Quelle für Sulfid-Ionen darstellt, versetzt wird, auf eine Temperatur von zumindest 40°C, jedoch vorzugsweise auf eine Temperatur von weniger als 65°C gebracht. Hierdurch wird gewährleistet, dass sich in diesem Teil der alkalischen Badlösung ein voluminöser Niederschlag von Zinksulfid bildet, der mit einfachen Filtrationsmethoden, beispielsweise mittels herkömmlicher Filterpressen, von der Badlösung enthaltend die Wirkkomponenten getrennt werden kann.

In einem besonders bevorzugten erfindungsgemäßen Verfahren wird gelöstes Zink kontinuierlich aus der alkalischen Badlösung der nasschemischen Vorbehandlung entfernt, indem dem Systemtank kontinuierlich Teilvolumina der alkalischen Badlösung entnommen werden, die mit der wasserlöslichen Verbindung, die eine Quelle für Sulfid-Ionen darstellt, versetzt werden, wonach der in diesen Teilvolumina der alkalischen Badlösung entstandene Feststoffanteil vorzugsweise durch Filtration von der alkalischen Badlösung getrennt wird und sodann die vom Feststoff befreite alkalische Badlösung, vorzugsweise als Filtrat, in den Systemtank zurückgeführt wird. Werden die Teilvolumina der alkalischen Badlösung bei einer Temperatur von zumindest 40°C, jedoch vorzugsweise von weniger als 65°C, mit der wasserlöslichen Verbindung versetzt, die eine Quelle für Sulfid-Ionen darstellt, so fällt der Feststoffanteil in Form eines voluminösen Niederschlages an, der durch einfache Filtrationsmethoden abgetrennt werden kann. Die Verwendung von Ultrafiltrationsmethoden ermöglicht auch die Abtrennung des sulfidischen Feststoffanteils, der in kolloidaler Form vorliegt und als solcher üblicherweise bei niedrigeren Temperaturen entsteht.

Ein solches Verfahren, bei dem dem Systemtank Teilvolumina entnommen, aufgearbeitet und anschließend wieder dem Systemtank zurückgeführt werden, wird im Stand der Technik allgemein auch als Bypass-Verfahren bezeichnet.

Die Entfernung des Feststoffanteils, der im Wesentlichen aus Zinksulfid besteht, im so genannten Bypass des Systemtanks kann auch mittels anderer herkömmlicher Trennverfahren beispielsweise mit Hilfe eines Zyklons oder einer Zentrifuge erfolgen.

Nach Abtrennung des Feststoffanteils, der im Wesentlichen aus Zinksulfid besteht, kann in dem zuvor beschriebenen bevorzugten erfindungsgemäßen Bypass-Verfahren, bei dem gelöstes Zink kontinuierlich aus der alkalischen Badlösung des Systemtanks entfernt wird, ein Überschuss wasserlöslicher Verbindungen, die eine Quelle für Sulfid-Ionen darstellen, durch Zugabe eines wasserlöslichen Oxidationsmittel entfernt werden. Voraussetzung hierfür ist, dass das wasserlösliche Oxidationsmittel ein Standardreduktionspotential größer als +0,6 V (SHE), besonders bevorzugt ein Standardreduktionspotential von größer als +1,0 V (SHE) aufweist. Vorzugsweise werden den in diesem speziellen erfindungsgemäßen Verfahren mit einer Sulfid-Ionen freisetzenden Verbindung versetzten und anschließend vom entstehenden Feststoffanteil befreiten Teilvolumina der alkalischen Badlösung Peroxide hinzugegeben, besonders bevorzugt Wasserstoffperoxid, bevor eine Rückführung der Teilvolumina in den Systemtank erfolgt. Ein solches bevorzugtes erfindungsgemäßes Bypass-Verfahren erbringt den Vorteil, dass die Konzentration an gelöstem Zink in den Teilvolumina der alkalischen Badlösung, die in den Systemtank zurückgeführt werden, durch die Zugabe eines Überschusses an Sulfid-Ionen freisetzenden wasserlöslichen Verbindungen praktisch "Null" ist. Die Zugabe des Oxidationsmittels unterdrückt eine mögliche Geruchsbildung, die durch das Ausgasen von Schwefelwasserstoff aus überschüssigen Sulfid-Ionen entstehen könnte.

In bevorzugten erfindungsgemäßen Verfahren, die die Abscheidung von gelöstem Zink mit Hilfe von Sulfid-Ionen freisetzenden Verbindungen vorsehen, sind solche wasserlöslichen Verbindungen als Quelle für Sulfid-Ionen und damit als Fällungsreagens bevorzugt, die ausgewählt sind aus Alkali- und Erdalkalimetallsulfiden, Ammoniumsulfid, Ammoniumpolysulfid oder Thioacetamid. Die Verwendung von Thioacetamid hat den besonderen Vorteil, dass diese organische Verbindung in alkalischen wässrigen Medien Sulfid-Ionen sehr moderat freisetzt und eine Geruchsbildung durch das Ausgasen geringer Mengen an Schwefelwasserstoff damit vollständig ausbleibt.

Bei einer erfindungsgemäßen Oberflächenbehandlung von metallischen Bauteilen in Serie, wobei auch Bauteile mit Aluminiumoberflächen behandelt werden, kann sich aufgrund von Beizprozessen in der alkalischen Badlösung der nasschemischen Vorbehandlung auch ein erhöhter Anteil an gelöstem Aluminium aufbauen. Ein erhöhter Anteil an gelöstem Aluminium kann sich wiederum negativ auf die Aktivierung der Aluminiumoberflächen auswirken, so dass nach erfolgter Konversionsbehandlung ein verminderter Korrosionsschutz beobachtet wird. Eine leichtere Verschlechterung der Korrosionsschutzeigenschaften in erfindungsgemäßen Verfahren wird oberhalb eines Anteils an Aluminium von 15 mmol/l beobachtet, während diese Verschlechterung oberhalb von 20 mmol/l signifikant wird.

In einer bevorzugten Ausführungsform der erfmdungsgemäßen Oberflächenbehandlung enthält die alkalische Badlösung der nasschemischen Vorbehandlung daher in Wasser gelöstes Aluminium, wobei jedoch ein Maximalwert von 20 mmol/l, vorzugsweise von 15 mmol/l, für die Konzentration an gelöstem Aluminium in der alkalischen Badlösung des Systemtanks dadurch nicht überschritten wird, dass zumindest ein Teil der alkalischen Badlösung des Systemtanks mit einer wasserlöslichen Verbindung, die eine Quelle für Silikat-Anionen darstellt, versetzt wird und ein sich in diesem Teil der alkalischen Badlösung bildender Niederschlag gegebenenfalls, vorzugsweise durch Filtration, von der alkalischen Badlösung getrennt wird.

In einem besonders bevorzugten erfindungsgemäßen Verfahren erfolgt die Reduktion des Anteils an gelöstem Aluminium in der alkalischen Badlösung der nasschemischen Vorbehandlung, indem der Badlösung des Systemtanks kontinuierlich Teilvolumina entnommen werden, die mit der wasserlöslichen Verbindung, die eine Quelle für Silikat-Anionen darstellt, versetzt werden, wonach der sich in diesen Teilvolumina der alkalischen Badlösung entstandene Feststoffanteil, vorzugsweise durch Filtration, von der alkalischen Badlösung getrennt wird und sodann die vom Feststoff befreiten Teilvolumina der alkalischen Badlösung, vorzugsweise als Filtrat, in den Systemtank zurückgeführt werden.

In einem derartigen bevorzugten Bypass-Verfahren kann die Zudosierung der wasserlöslichen Verbindungen, die eine Quelle für Silikat-Anionen darstellt, unabhängig von der Zudosierung der Zudosierung derjenigen wasserlöslichen Verbindungen, die eine Quelle für Sulfid-Ionen darstellt, erfolgen. Auf diese Weise kann eine Regelung der Anteile an gelöstem Zink und Aluminium im Systemtank ebenfalls unabhängig voneinander erfolgen. In einem besonders bevorzugten Bypass-Verfahren werden daher die aus dem Systemtank entnommenen Teilvolumina der alkalischen Badlösung zunächst mit entsprechenden Mengen dieser Fällungsreagenzien versetzt und der Feststoffanteil bestehend im Wesentlichen aus Zinksulfid und Aluminiumsilikat, vorzugsweise durch Filtration, von der Badlösung getrennt und sodann die von diesem Feststoffanteil befreiten Teilvolumina der alkalischen Badlösung, vorzugsweise als Filtrat, in den Systemtank zurückgeführt.

Als wasserlösliche Verbindungen, die eine Quelle für Silikat-Anionen und damit ein Fällungsreagens für gelöstes Aluminium darstellen, werden vorzugsweise Alkali- und Erdalkalimetallsilikate und/oder Kieselsäure eingesetzt.

Die Filtration in den zuvor genannten bevorzugten Ausführungsformen des erfindungsgemäßen Verfahrens erfolgt vorzugsweise mit einer Ausschlussgrenze von 0,5 $\mu$m, besonders bevorzugt mit einer Ausschlussgrenze von 0,1 $\mu$m.

Die Anteile an gelöstem Zink und Aluminium in der alkalischen Badlösung der nasschemischen Vorbehandlung werden vorzugsweise prozesssimultan, also während der erfindungsgemäßen Oberflächenbehandlung der metallischen Bauteile in Serie, analytisch bestimmt und direkt oder indirekt als Steuergröße für technische Maßnahmen zur Reduktion des Anteils an gelöstem Zink und/oder Aluminium im Systemtank verwendet. Hierfür wird vorzugsweise ein Volumenstrom aus dem Systemtank entnommen, filtriert, vorzugsweise mit einer Ausschlussgrenze von 0,1 $\mu$m, und vor dem Zurückspeisen des Filtrats in den Systemtank ein Probevolumen entnommen und der Anteil an gelöstem Zink und Aluminium, vorzugsweise photometrisch bestimmt, wobei der Bestimmungswert für die gelösten Anteile sodann mit den zuvor genannten bevorzugten Maximalwerten für gelöstes Aluminium und mit dem Maximalwert $Zn_{max}$ verglichen wird

und in Abhängigkeit von der Differenz zu den jeweiligen Maximalwerten eine Zudosierung von wasserlöslichen Verbindungen, die Sulfid-Ionen freisetzen, und/oder von wasserlöslichen Verbindungen, die Silikat-Anionen freisetzen, zumindest zu einem Teilvolumen der alkalischen Badlösung des Systemtanks der nasschemischen Vorbehandlung erfolgt. Vorzugsweise erfolgt die Bestimmung der Anteile an gelöstem Zink und Aluminium innerhalb von 5 Minuten ab Entnahme des Probevolumens.

Für jede Bestimmungsmethode für gelöstes Zink und Aluminium gilt, dass diese mit Maßlösungen von Urtitersubstanzen zu kalibrieren ist.

Eine photometrische Bestimmung der Anteile an gelösten Zink und Aluminium kann im selben Probevolumen oder in voneinander getrennten Teilen des entnommen Probevolumens erfolgen.

Im erfindungsgemäßen Verfahren folgt der nasschemischen Vorbehandlung mit der alkalischen Badlösung zur Aktivierung der Aluminiumoberflächen eine Konversionsbehandlung zumindest der Aluminiumoberflächen der metallischen Bauteile.

Die Konversionsbehandlung stellt erfindungsgemäß eine nasschemische außenstromlose Vorbehandlung dar, in deren Verlauf eine anorganische Beschichtung auf den Aluminiumoberflächen der metallischen Bauteile hervorgerufen wird, die zumindest teilweise aus Elementen der Behandlungslösung aufgebaut ist, die nicht bloß Sauerstoffatome sind. Konversionsbehandlungen sind im Stand der Technik allgemein bekannt und beispielsweise als Phosphatierung, Chromatierung und chromfreie alternative Verfahren, beispielsweise auf Basis komplexer Metallfluoride, vielfach beschrieben.

In einem bevorzugten erfindungsgemäßen Verfahren erfolgt die Konversionsbehandlung mit einer sauren wässrigen Zusammensetzung. Es zeigt sich, dass das erfindungsgemäße Verfahren auch dann konstant gute Ergebnisse im Korrosionsschutz auf den Aluminiumoberflächen der in Serie oberflächenbehandelten metallischen Bauteile liefert, wenn in der Konversionsbehandlung das In-Kontakt-Bringen mit der sauren Zusammensetzung nur für eine solche Dauer erfolgt, dass die Oberflächen von Aluminium einen Beizabtrag von weniger als 0,1 g/m$^2$ erfahren.

Für Oberflächenbehandlungen von metallischen Bauteilen in Serie umfassend eine alkalische Vorbehandlung und eine solche nachfolgende Konversionsbehandlung, die nur einen geringen Beizabtrag von den Aluminiumoberflächen von weniger als 0,1 g/m$^2$ herbeiführt, ist das erfindungsgemäße Verfahren für einen guten Korrosionsschutz auf den Aluminiumoberflächen daher besonders bevorzugt anzuwenden, da es bereits in der Vorbehandlung eine hervorragende Aktivierung der Aluminiumoberflächen gewährleistet.

Insbesondere vorteilhaft ist das erfindungsgemäße Verfahren, wenn die der nasschemischen Vorbehandlung mit der alkalischen Badlösung nachfolgende Konversionsbehandlung mit einer sauren wässrigen Zusammensetzung enthaltend wasserlösliche Verbindungen der Elemente Zr, Ti und/oder Si erfolgt. Bevorzugt sind in diesem Zusammenhang saure wässrige Zusammensetzungen, die zusätzlich Verbindungen enthalten, die eine Quelle für Fluorid-Ionen darstellen. Die wasserlöslichen Verbindungen der Elemente Zr, Ti und/oder Si sind vorzugsweise ausgewählt aus Hexafluorosäuren dieser Elemente sowie deren Salze, während Verbindungen, die eine Quelle für Fluorid-Ionen darstellen, vorzugsweise ausgewählt sind aus Alkalimetallfluoriden. Der Gesamtanteil an wasserlöslichen Verbindungen der Elemente Zr, Ti und/oder Si beträgt in der sauren wässrigen Zusammensetzung der Konversionsbehandlung der erfindungsgemäßen Oberflächenbehandlung vorzugsweise zumindest 5 ppm, insbesondere bevorzugt zumindest 10 pmm, jedoch enthält die saure Zusammensetzung insgesamt vorzugsweise nicht mehr als 1000 ppm dieser Verbindungen jeweils bezogen auf die zuvor genannten Elemente. Der pH-Wert der sauren wässrigen Zusammensetzung liegt vorzugsweise in einem Bereich von 2-4,5.

Das erfindungsgemäße Verfahren eignet sich in besonderem Maße zur seriellen Oberflächenbehandlung von metallischen Bauteilen, die in Mischbauweise gefertigt sind und neben Oberflächen von Aluminium auch Oberflächen von Zink aufweisen, da für derartige Bauteile eine über das gesamte Bauteil weitgehend homogene vor Korrosion schützende Beschichtung zur Minimierung der Kontaktkorrosion aufgrund der erfindungsgemäßen seriellen Oberflächenbehandlung dauerhaft erzielt werden kann. Insbesondere für metallische Bauteile in Mischbauweise, deren Oberflächen zu zumindest 2%, vorzugsweise zu zumindest 5% aus Oberflächen von Aluminium und zu zumindest 5%, vorzugsweise zu zumindest 10% aus Oberflächen von Zink bestehen, kommt ein erfindungsgemäßes Verfahren zur seriellen Oberflächenbehandlung erfolgreich zum Tragen, bei dem der Anteil an gelösten Zink in der alkalischen Badlösung des Systemtanks vorzugsweise mittels Zugabe an wasserlöslichen Verbindungen, die eine Quelle für Sulfid-Ionen darstellen, unter dem Maximalwert $Zn_{max}$ gehalten wird. Der prozentuale Anteil der Oberflächen von Aluminium und Zink bezieht sich dabei stets auf die Gesamtoberfläche des metallischen Bauteils, die mit der alkalischen Badlösung der nasschemischen Vorbehandlung in Kontakt gebracht wird.

Als Oberflächen von Zink und Aluminium gelten erfindungsgemäß auch metallische Oberflächen von Legierungen dieser Metalle solange der Anteil der hinzulegierten Elemente unterhalb von 50 At.-% liegt. Weiterhin werden Oberflächen von Zink im Sinne der vorliegenden Erfindung auch von verzinkten oder legierungsverzinkten Stahlelementen gebildet, die alleine oder mit anderen metallischen Bauelementen zum metallischen Bauteil zusammengefügt sind.

Ausführungsbeispiele:

Im Folgenden wird der Einfluss alkalischer Vorbehandlungen auf die Effektivität der Konversionsbehandlung anhand einzelner Ausführungsbeispiele dargelegt. Veranschaulicht wird dabei insbesondere der positive Einfluss auf die Filiform-Korrosion von in erfindungsgemäßen Verfahren oberflächenbehandeltem Aluminium, das zusätzlich mit einem kathodischen Tauchlack beschichtet wurde.

In Tabelle 1 sind die Zusammensetzungen unterschiedlicher alkalischer Vorbehandlungen (Systeme A-E) angegeben. Neben den prototypischen alkalischen Systemen A-D, die hinsichtlich ihrer freien Alkalinität und des pH-Wertes variieren, wurde ein Reiniger zur alkalischen Entfettung von Metallen (System E) und eine alkalische Vereisung nach der Art der DE 102010001686 angeführt. In der Tabelle 1 ist zudem der für das jeweilige System zur alkalischen Vorbehandlung spezifische Maximalwert $Zn_{max}$ für gelöstes Zink gelistet.

Um den positiven Einfluss solcher Verfahren zur Oberflächenbehandlung umfassend alkalische Vorbehandlung und nachfolgende Konversionsbehandlung darzulegen, für die in der Vorbehandlung Zink- und Aluminium-Ionen unterhalb des jeweiligen spezifischen Maximalwertes gemäß der vorliegenden Erfindung gehalten werden, wurden den Systemen A-E definierte Mengen an gelöstem Zink und Aluminium hinzugegeben. Für alkalische Vorbehandlungen, die mehr gelöstes Zink oder Aluminium enthielten als es der jeweilige Maximalwert vorschreibt, wurden Vergleichsversuche durchgeführt, nachdem diesen Vorbehandlungslösungen eine Menge an Fällungsreagens hinzugegeben wurde, die genügte, um die ZinkKonzentration unterhalb des Maximalwertes zu bringen. Es wurden ausschließlich Aluminiumbleche oberflächenbehandelt. Die Alterung der alkalischen Badlösung eines Systemtanks bei einer nasschemischen Behandlung von metallischen Bauteilen in Serie wurde wie bereits angeführt durch definierte Zugaben wasserlöslicher Zink- und Aluminiumsalze simuliert. Die Bestimmung des tatsächlichen und in der Tabelle 2 angeführten Wertes der Konzentration an gelöstem Zink und Aluminium erfolgte unmittelbar vor dem In-Kontakt-Bringen der Aluminiumbleche mit dem jeweiligen alkalischen System. Auf die analytische Bestimmungsmethode wird weiter unten eingegangen.

Der alkalischen Vorbehandlung folgte stets nass-in-nass mit dazwischenliegendem Spülschritt eine anorganische chromfreie Konversionsbehandlung. Abschließend wurde ein kathodischer Elektrotauchlack aufgebracht und die Filiform-Korrosion der derart oberflächenbehandelten Aluminiumbleche bewertet. Die dazugehörigen Resultate sind in der Tabelle 2 zusammengefasst.

Der Prozess für die nasschemische Oberflächenbehandlung von Aluminiumblechen (Alu AA 6014) bestand im Detail aus folgenden Einzelschritten:

1. Alkalische Vorbehandlung mit Zusammensetzungen entsprechend der Beispiele A1-3; B1-4; C1-4; D1-5; E1-2 und F1-6 (siehe Tabelle 2 und die jeweilige Basisrezeptur aus der Tabelle 1) durch Eintauchen der Bleche bei 60 °C für 3 Minuten

2. Spülen mit entionisiertem Wasser ($\kappa$ < 1$\mu$Scm$^{-1}$) durch Eintauchen der Bleche bei 25 °C für 30 Sekunden

3. Anorganische Konversionsbehandlung mit einer sauren wässrigen Zusammensetzung enthaltend
0,15 g/l $H_2ZrF_6$
40 ppm freies Fluorid (gemessen mit einer ionenselektiven Einstabmesskette) pH-Wert 4,5
durch Eintauchen bei 30 °C für 2 Minuten (differenzgravimetrisch bestimmter Beizabtrag vom Aluminiumblech <0,05 g/m$^2$)

4. Spülen mit entionisiertem Wasser ($\kappa$ < 1$\mu$Scm$^{-1}$) durch Eintauchen der Bleche bei 25 °C für 30 Sekunden

5. Abscheiden des kathodischen Tauchlacks (Cathoguard 500, Fa. BASF) in einer Trockenfilmdicke von 20 $\pm$ 2 $\mu$m. Das Einbrennen des Tauchlackes erfolgte bei 180 °C für 25 Minuten.

Die tatsächliche Konzentration an gelöstem Zink und Aluminium in der alkalischen Vorbehandlung gemäß der Tabelle 2 wurde mittels optischer Emmissionsspektroskopie mit induktiv gekoppeltem Argon-Plasma (ICP-OES) bestimmt.

Nach der Probennahme aus der alkalischen Systemlösung kann der Anteil an gelöstem Zink durch eine Nachausfällung schwerlöslicher Hydroxide oder Phosphate weiter abnehmen. Es ist daher für die Bestimmung der tatsächlichen und damit erfindungsgemäßen Konzentration an gelöstem Zink und Aluminium notwendig, dass die Probe unmittelbar nach ihrer Entnahme - innerhalb von 5 Minuten - zunächst über einen Filter mit einer Ausschlussgrenze von 0,1 $\mu$m filtriert wird und anschließend angesäuert wird. Derart vorbereitete Proben können zu einem beliebigen späteren Zeitpunkt analytisch vermessen werden, da der Anteil an gelöstem Zink oder Aluminium im sauren Probenvolumen unveränderlich ist.

Dementsprechend wurde eine Probe von 2ml der alkalischen Systemlösung mit einer Spritze entnommen und nach Aufsetzen eines Spritzenfilters über eine im Spritzenfilter integrierte Zellulose-Acetat Membran mit einer Porösität von 0,1 μm filtriert. Das Filtrat der Filterspritze wurde sodann mit so vielen Tropfen 50 Gew.%-iger Salpetersäure versetzt und gut durchgeschüttelt, bis der pH-Wert unterhalb von 2 lag.

Im so aufgearbeiteten Probevolumen wurde mittels ICP-OES nach Kalibrierung des Messgerätes (Optima 7300 DV, Fa. Perkin Elmer) mit Standardmaßlösungen von Urtitersubstanzen enthaltend 1 ppm, 5 ppm und 10 ppm an gelöstem Zink bzw. 4 ppm, 20 ppm und 40 ppm an gelöstem Aluminium der Anteil an Zink und Aluminium im angesäuerten Filtrat bestimmt, der wiederum der tatsächlichen Konzentration dieser Elemente in der alkalischen Systemlösung zum Zeitpunkt der Probenentnahme entspricht.

Der Beizabtrag von den Aluminiumblechen bei der alkalischen Vorbehandlung mit den in der Tabelle 2 aufgeführten Systemlösungen wurde differenzgravimetrisch bestimmt. Hierfür wurden die Aluminiumbleche zunächst mit Aceton von organischen Rückständen wie Fetten und Ölen befreit und nach dem Trockenblasen gewogen. Die so gereinigten Bleche wurden sodann entsprechend der oben genannten Prozessfolge mit der alkalischen Systemlösung vorbehandelt und nach dem nachfolgenden Spülgang mit entionisiertem Wasser ebenfalls trocken geblasen und erneut gewogen. Die flächennormierte Massendifferenz entspricht dann dem Beizabtrag.

Die Filiform-Korrosion wurde nach 42-tägiger Auslagerung der Aluminiumbleche gemäß DIN EN 3655 ausgewertet. Es wurde jeweils die mittlere Fadenlänge und der längste Faden auftretender Filiform-Korrosion bestimmt.

Die Ergebnisse zeigen eindeutig, dass, sobald der Maximalwert $Zn_{max}$ für gelöstes Zink überschritten ist, eine deutliche Verschlechterung in der Filiform-Korrosion beobachtet wird (A3; B3; C3; D4-5; E2; F3 und F5). Die Verschlechterung geht einher mit einer Verringerung der Beizrate bezogen auf das zu beschichtende Aluminium-Substrat. Sobald eine Menge einer Sulfid-Ionen freisetzenden Verbindung (Thioacetamid, Natriumsulfid) hinzugegeben wird und der tatsächliche gelöste Zinkgehalt dadurch unterhalb des Maximalwertes $Zn_{max}$ reduziert wird, erwirkt die erfindungsgemäße Oberflächenbehandlung sehr gute Ergebnisse im Filiform-Test (B4; C4; F6).
Der tatsächliche analytisch bestimmte Gehalt an gelöstem Zink lieferte für diese alkalischen Systemlösungen folgende Werte:

B4: <0,24 mg/l (<0,004 mmol/l)
C4: 1.2 mg/l (0,018 mmol/l)
F6: 484 mg/l (7,4 mmol/l)

Damit wurde gezeigt, dass unabhängig von der spezifischen Art der alkalischen Systemlösung, d.h. unabhängig davon, ob es sich um einen Reiniger zur Entfettung oder eine alkalische Vereisung handelt, die Kontrolle des Maximalwertes an gelöstem Zink in der alkalischen Vorbehandlung bei nachfolgender Konversionsbehandlung gewährleistet, dass ein guter Korrosionsschutz auf den Aluminiumoberflächen der Bauteile erzielt wird.

Weiterhin belegen die Versuche F2 und F3, dass zu hohe Gehalte an gelöstem Aluminium ebenfalls schädlich für die Korrosionsbeständigkeit der oberflächenbehandelten Aluminiumbleche sind. Auch hier geht das Überschreiten des Maximalwertes für gelöstes Aluminium in der alkalischen Vorbehandlung mit einer drastischen Erniedrigung des Beizabtrags vom Aluminiumblech einher (siehe F3). Die Zudosierung einer solchen Menge an Silikaten zu dieser alkalischen Vorbehandlung, die theoretisch eine Reduzierung des gelösten Aluminiumanteils auf 500 mg/l bewirkt, resultiert wiederum in einem Anstieg des Beizabtrages vom Aluminiumblech und liefert nach abgeschlossener Oberflächenbehandlung ein sehr gutes Ergebnis im Filiform-Test (vgl. F3 und F4).
Es zeigt sich also allgemein, dass ein Beizabtrag von zumindest 0,5 g/m² von den Oberflächen des Aluminiums in der nasschemischen Vorbehandlung mit der alkalischen Badlösung erfolgen muss, um mit einer nachfolgenden Konversionsbehandlung eine hinreichend gute Qualität der korrosionsschützenden Oberflächenbehandlung erzielen zu können.

Tab. 1 Zusammensetzungen verschiedener alkalischer Systeme zur Vorbehandlung

| System | Phosphat [g/l] | Carbonat * [g/l] | Additive | Y [mmol/l] | FA [mmol/l] | pH-Wert ** | $Zn_{max}$ [mmol/l] |
|--------|----------------|------------------|----------|------------|-------------|------------|----------------------|
| A | 4,10 | 5,4 | - | - | 77 | 11,0 | 0,062 |
| B | 3,60 | 1,3 | - | - | 34 | 11,5 | 0,034 |
| C | 3,60 | 10,8 | - | - | 155 | 11,5 | 0,155 |
| D | 4,10 | 5,4 | - | - | 49 | 12,0 | 0,059 |
| E | - | 5,0 # | - | 43,9 ‡ | 40 | 10,5 | 26,4 |
| F | - | 15,0 # | Fe(NO₃)₃ | 43,9 ‡ | 15 | 11,0 | 26,5 |

* als $K_2CO_3$
# als $NaHCO_3$

(fortgesetzt)

| System | Phosphat [g/l] | Carbonat * [g/l] | Additive | Y [mmol/l] | FA [mmol/l] | pH-Wert ** | $Zn_{max}$ [mmol/l] |
|---|---|---|---|---|---|---|---|

Tab. 1 Zusammensetzungen verschiedener alkalischer Systeme zur Vorbehandlung

t 2,2 g/l $K_4P_2O_7$; 7,1 g/l HEDP; 0,6 g/l Natriumgluconat

\* Einstellung des pH-Wertes erfolgte mit Kaliumhydroxid

Tab. 2

Filiform-Korrosionstest nach DIN EN 3665 auf vorbehandelten und konversionsbeschichteten Aluminium-Blechen (Alu AA 6014) nach Schichtaufbau mit kathodischem Tauchlack (Cathoguard 500, Fa. BASF)

| System Nr. | Nr. | Zn [mmol/l] | A1 [mmol/l] | Sulfid [1] [g/l] | Silikat [2] [g/l] | Beizrate [3] [g/m²] | Fadenlänge [4] [mm] |
|---|---|---|---|---|---|---|---|
| A | 1 | - | - | - | - | 0,66 | 0,3 / 2,0 |
|   | 2 | 0,012 | - | - | - | 0,53 | 0,4 / 2,3 |
|   | 3 | 0,076 | - | - | - | 0,01 | 3,5 / 6,5 |
| B | 1 | - | - | - | - | 0,70 | 0,2 / 1,9 |
|   | 2 | 0,008 | - | - | - | 0,50 | 0,4 / 2,2 |
|   | 3 | 0,153 | - | - | - | 0,04 | 3,2 / 6,0 |
|   | 4 | 0,153 | - | 0,15* | - | 0,75 | 0,2 / 1,8 |
| C | 1 | - | - | - | - | 1,27 | 0,1 / 1,1 |
|   | 2 | 0,018 | - | - | - | 0,69 | 0,2 / 1,8 |
|   | 3 | 0,275 | - | - | - | 0,00 | 3,7 / 6,8 |
|   | 4 | 0,275 | - | 0,15 * | - | 1,25 | 0,1 / 1,2 |
| D | 1 | - | - | - | - | 1,54 | 0,2 / 1,6 |
|   | 2 | 0,032 | - | - | - | 0,71 | 0,3 / 1,9 |
|   | 3 | 0,041 | - | - | - | 0,58 | 0,3 / 2,4 |
|   | 4 | 0,105 | - | - | - | 0,19 | 2,3 / 4,8 |
|   | 5 | 0,550 | - | - | - | 0,01 | 3,6 / 6,1 |
| E | 1 | 7,644 | - | - |  | 0,90 | 0,3 / 1,1 |
|   | 2 | 30,576 | - | - |  | 0,00 | 3,1 / 7,1 |
| F | 1 | 7,644 | - |  |  | 0,83 | 0,2 / 1,2 |
|   | 2 | 7,644 | 18,649 |  |  | 0,60 | 0,4 / 1,7 |
|   | 3 | 7,644 | 37,297 |  |  | 0,20 | 2,5 / 5,2 |
|   | 4 | 7,644 | 37,297 | - | 4,00 # | 0,59 | 0,4 / 1,9 |
|   | 5 | 30,576 | - | - | - | 0,22 | 2,5 / 5,1 |
|   | 6 | 30,576 | - | 1,79** | - | 0,81 | 0,3 / 1,5 |

[1,2] theoretische Konzentrationsangaben auf Grundlage der jeweils zudosierten Menge des Fällungsagens

[3] Beizabtrag unmittelbar nach Vorbehandlung mit der jeweiligen Zusammensetzung gemäß Tab. 1 differenzgravimetrisch bestimmt

[4] angeben als mittlere Fadenlänge und Fadenlänge des längsten Fadens

\* als Thioacetamid \*\* als Natriumsulfit # als Natronwasserglass 40/42 (29% $SiO_2$)

**Patentansprüche**

1.  Verfahren zur nasschemischen Oberflächenbehandlung von metallischen Bauteilen in Serie, bei dem sowohl metallische Bauteile, die Oberflächen von Aluminium, als auch Bauteile, die Oberflächen von Zink aufweisen, durch In-Kontakt-Bringen mit einer alkalischen Badlösung, die in einem Systemtank bevorratet wird, nasschemisch vorbehandelt werden und anschließend nass-in-nass eine Konversionsbehandlung zumindest der Oberflächen von Aluminium der metallischen Bauteile erfolgt, wobei der pH-Wert der alkalischen Badlösung in der nasschemischen Vorbehandlung größer als 10 ist und die freie Alkalinität zumindest 0,5 Punkte, aber weniger als 50 Punkte beträgt, wobei folgender Maximalwert für die Konzentration an gelöstem Zink in der alkalischen Badlösung des Systemtanks nicht überschritten wird:

$$Zn_{max} = 0,0004 \times (pH - 9) \times [FA] + 0,6 \times [Y]$$

    pH: pH-Wert
    $Zn_{max}$: Maximalwert für die Konzentration an gelöstem Zink in mmol/l
    [FA]: freie Alkalinität in mmol/l,
    [Y]: Konzentration in mmol/l von Komplexbildnern Y in Form wasserlöslicher kondensierter Phosphate berechnet als $P_2O_6$ und/oder in Form wasserlöslicher organischer Verbindungen, die zumindest eine funktionale Gruppe ausgewählt aus $COOX_{1/n}$, $-OPO_3X_{2/n}$ und/oder $-PO_3X_{2/n}$ aufweisen, wobei X entweder ein Wasserstoffatom oder ein Alkali- und/oder Erdalkalimetall-Atom mit der jeweiligen Wertigkeit n darstellt

2.  Verfahren nach Anspruch 1, **dadurch gekennzeichnet, dass** die nasschemische Oberflächenbehandlung der metallischen Bauteile in Serie zumindest für eine solche Anzahl metallischer Bauteile erfolgt, dass eine Gesamtfläche allein an Zinkoberflächen der metallischen Bauteile in Quadratmetern mit der alkalischen Badlösung des Systemtanks nasschemisch vorbehandelt wird, die größer ist als folgender Term:

$$\frac{V_B \times Zn_{max} \times M_{Zn}}{\Delta m_{Zn}}$$

    $V_B$: Badvolumen in $m^3$
    $Zn_{max}$: Maximalkonzentration an gelöstem Zink in mmol/l
    $M_{Zn}$: Molmasse von Zink in g/mol
    $\Delta m_{Zn}$: flächennormierter Beizabtrag bezogen auf die Zinkoberflächen der metallischen Bauteile in $g/m^2$

3.  Verfahren nach einem oder beiden der Ansprüche 1 und 2, **dadurch gekennzeichnet, dass** ein Überschreiten des Maximalwerts $Zn_{max}$ in der nasschemischen Vorbehandlung dadurch verhindert wird, dass aus der alkalischen Badlösung des Systemtanks kontinuierlich oder diskontinuierlich gelöstes Zink entfernt wird, wobei dies nicht allein dadurch geschieht, dass zumindest ein Teil der alkalischen Badlösung des Systemtanks enthaltend gelöstes Zink verworfen und ein anderer Teil einer alkalischen Lösung, der lediglich die Wirkkomponenten der alkalischen Badlösung enthält, dem Systemtank hinzugefügt wird.

4.  Verfahren nach einem oder mehreren der vorherigen Ansprüche, **dadurch gekennzeichnet, dass** ein Überschreiten des Maximalwertes $Zn_{max}$ in der nasschemischen Vorbehandlung verhindert wird, indem zumindest ein Teil der alkalischen Badlösung des Systemtanks mit einer wasserlöslichen Verbindung, die eine Quelle für Sulfid-Ionen darstellt, versetzt wird und ein in diesem Teil der alkalischen Badlösung entstehender Feststoffanteil gegebenenfalls von der alkalischen Badlösung getrennt wird.

5.  Verfahren nach Anspruch 4, **dadurch gekennzeichnet, dass** der Teil der alkalischen Badlösung des Systemtanks, der mit der wasserlöslichen Verbindung, die eine Quelle für Sulfid-Ionen darstellt, versetzt wird, eine Temperatur von zumindest 40°C, jedoch vorzugsweise von weniger als 65°C aufweist.

6.  Verfahren nach einem oder beiden der vorherigen Ansprüche 4 und 5, **dadurch gekennzeichnet, dass** der alkalischen Badlösung des Systemtanks kontinuierlich Teilvolumina entnommen werden, die mit der wasserlöslichen Verbindung, die eine Quelle für Sulfid-Ionen darstellt, versetzt werden, wonach der in diesen Teilvolumina der alkalischen Badlösung entstehende Feststoffanteil durch Filtration von der alkalischen Badlösung getrennt wird und sodann das Filtrat in die alkalische Badlösung des Systemtanks zurückgeführt wird.

7. Verfahren nach Anspruch 6, **dadurch gekennzeichnet, dass** das Filtrat vor der Rückführung in die alkalische Badlösung des Systemtanks zum Abbau überschüssiger wasserlöslicher Verbindungen, die eine Quelle für Sulfid-Ionen darstellen, mit einem wasserlöslichen Oxidationsmittel versetzt wird, dessen Standardreduktionspotential größer als +0,6 V (SHE) ist, vorzugsweise mit Wasserstoffperoxid.

8. Verfahren nach einem oder mehreren der vorherigen Ansprüche, **dadurch gekennzeichnet, dass** die alkalische Badlösung der nasschemischen Vorbehandlung in Wasser gelöstes Aluminium enthält, wobei ein Maximalwert von 20 mmol/l, vorzugsweise von 15 mmol/l, für die Konzentration an gelöstem Aluminium in der alkalischen Badlösung des Systemtanks dadurch nicht überschritten wird, dass zumindest ein Teil der alkalischen Badlösung des Systemtanks mit einer wasserlöslichen Verbindung, die eine Quelle für Silikat-Anionen darstellt, versetzt wird und ein in diesem Teil der alkalischen Badlösung entstehender Feststoffanteil gegebenenfalls durch Filtration von der alkalischen Badlösung getrennt wird.

9. Verfahren nach Anspruch 8, **dadurch gekennzeichnet, dass** der alkalischen Badlösung des Systemtanks kontinuierlich Teilvolumina entnommen werden, die mit der wasserlöslichen Verbindung, die eine Quelle für Silikat-Anionen darstellt, versetzt werden, wonach der sich in diesen Teilvolumina der alkalischen Badlösung gebildete Feststoffanteil durch Filtration von der alkalischen Badlösung getrennt wird und sodann das Filtrat in die alkalischen Badlösung des Systemtanks zurückgeführt wird.

10. Verfahren gemäß einem oder mehreren der vorherigen Ansprüche, **dadurch gekennzeichnet, dass** die der nasschemischen Vorbehandlung nachfolgende Konversionsbehandlung mit einer sauren wässriger Zusammensetzung und das In-Kontakt-Bringen mit dieser für eine solche Dauer erfolgt, dass die Oberflächen von Aluminium einen Beizabtrag von weniger als 0,1 g/m$^2$ erfahren.

11. Verfahren gemäß einem oder mehreren der vorherigen Ansprüche, **dadurch gekennzeichnet, dass** die der nasschemischen Vorbehandlung nachfolgende Konversionsbehandlung mit einer sauren wässrigen Zusammensetzung enthaltend wasserlösliche Verbindungen der Elemente Zr, Ti und/oder Si sowie gegebenenfalls Verbindungen, die eine Quelle für Fluorid-Ionen darstellen, erfolgt.

12. Verfahren gemäß einem oder mehreren der vorherigen Ansprüche 3 bis 11, **dadurch gekennzeichnet, dass** metallische Bauteile in Mischbauweise vorbehandelt werden, deren Oberflächen vorzugsweise zu mindestens 2% Oberflächen von Aluminium sind, wobei der Oberflächenanteil an Zink vorzugsweise zumindest 5% beträgt.

**Claims**

1. A method for the wet chemical surface treatment of metallic components in series, in which method both metallic components, having surfaces of aluminum, and components, having surfaces of zinc, are subjected to a wet chemical pretreatment by contacting them with an alkaline bath solution, stored in a system tank, and a conversion treatment of at least the aluminum surfaces of the metallic components then occurs in a wet-in-wet manner, whereby the pH of the alkaline bath solution in the wet chemical pretreatment is greater than 10 and the free alkalinity is at least 0.5 points but less than 50 points, whereby the following maximum value for the concentration of dissolved zinc in the alkaline bath solution of the system tank is not exceeded:

$$Zn_{max} = 0.0004 \times (pH - 9) \times [FA] + 0.6 \times [Y]$$

pH: pH value

$Zn_{max}$: maximum value for the concentration of dissolved zinc in mmol/L

[FA]: free alkalinity in mmol/L

[Y]: concentration in mmol/L of complexing agents Y in the form of water-soluble condensed phosphates cal-culated as $P_2O_6$ and/or in the form of water-soluble organic compounds, which have at least one functional group selected from $COOX_{1/n}$, $-OPO_3X_{2/n}$, and/or $-PO_3X_{2/n}$, where X represents either a hydrogen atom or an alkaline and/or alkaline earth metal atom with the respective valence n.

2. The method according to claim 1, **characterized in that** the wet chemical surface treatment of the metallic components in series occurs at least for such a number of metallic components that a total surface area, in square meters, solely of zinc surfaces of the metallic components is subjected to wet chemical pretreatment with the alkaline bath solution of the system tank, which area is greater than the following term:

$$\frac{V_B \times Zn_{max} \times M_{Zn}}{\Delta m_{Zn}}$$

$V_B$: bath volume in m$^3$
$Zn_{max}$: maximum concentration of dissolved zinc in mmol/L
$M_{Zn}$: molar mass of zinc in g/mol
$\Delta m_{Zn}$: surface-normalized pickling removal based on the zinc surfaces of the metallic components in g/m$^2$.

3. The method according to one or both claims 1 and 2, **characterized in that** exceeding of the maximum value $Zn_{max}$ in the wet chemical pretreatment is prevented by continuously or discontinuously removing dissolved zinc from the alkaline bath solution of the system tank, whereby this does not occur solely by discarding at least one portion of the alkaline bath solution of the system tank containing dissolved zinc and adding another portion of an alkaline solution, which contains only the active components of the alkaline bath solution, to the system tank.

4. The method according to one or more of the preceding claims, **characterized in that** exceeding of the maximum value $Zn_{max}$ in the wet chemical pretreatment is prevented by adding a water-soluble compound, which represents a source of sulfide ions, to at least one portion of the alkaline bath solution of the system tank and optionally separating a solid portion, formed in this portion of the alkaline bath solution, from the alkaline bath solution.

5. The method according to claim 4, **characterized in that** the portion of the alkaline bath solution of the system tank, to which the water-soluble compound, which represents a source of sulfide ions, is added, has a temperature of at least 40°C but preferably of less than 65°C.

6. The method according to one or both of the preceding claims 4 and 5, **characterized in that** partial volumes, to which the water-soluble compound, which represents a source of sulfide ions, is added, are removed continuously from the alkaline bath solution of the system tank, after which the solid portion, forming in said partial volumes of the alkaline bath solution, is removed from the alkaline bath solution by filtration and the filtrate is then returned to the alkaline bath solution of the system tank.

7. The method according to claim 6, **characterized in that** a water-soluble oxidizing agent, whose standard reduction potential is greater than +0.6 V (SHE), preferably hydrogen peroxide, is added to the filtrate before it is returned to the alkaline bath solution of the system tank to break down excess water-soluble compounds, which represent a source of sulfide ions.

8. The method according to one or more of the preceding claims, **characterized in that** the alkaline bath solution of the wet chemical pretreatment contains aluminum dissolved in water, whereby a maximum value of 20 mmol/L, preferably of 15 mmol/L, for the concentration of dissolved aluminum in the alkaline bath solution of the system tank is not exceeded because a water-soluble compound, which represents a source of silicate anions, is added to at least one portion of the alkaline bath solution of the system tank and a solid portion, forming in said portion of the alkaline bath solution, is optionally separated from the alkaline bath solution by filtration.

9. The method according to claim 8, **characterized in that** partial volumes, to which the water-soluble compound, which represents a source of silicate anions, is added, are continuously removed from the alkaline bath solution of the system tank, after which the solid portion, formed in said partial volumes of the alkaline bath solution, is removed from the alkaline bath solution by filtration and the filtrate is then returned to the alkaline bath solution of the system tank.

10. The method according to one or more of the preceding claims, **characterized in that** the conversion treatment following the wet chemical pretreatment with an acidic aqueous composition and the contacting with it occur for such a time period that the surfaces of aluminum experience a pickling removal of less than 0.1 g/m$^2$.

11. The method according to one or more of the preceding claims, **characterized in that** the conversion treatment following the wet chemical pretreatment occurs with an acidic aqueous composition containing water-soluble compounds of the elements Zr, Ti, and/or Si as well as optionally compounds, which represent a source of fluoride ions.

12. The method according to one or more of the preceding claims 3 to 11, **characterized in that** metallic components with a composite structure are pretreated and whose surfaces constitute preferably at least 2% aluminum surfaces, the surface portion of zinc being preferably at least 5%.

## Revendications

1. Procédé de traitement chimique par voie humide de surface de composants métalliques en série, dans lequel des composants métalliques, qui possèdent des surfaces en aluminium, et des composants, qui possèdent des surfaces en zinc, sont prétraitées chimiquement par voie humide par mise en contact avec une solution de bain alcaline, qui est stockée dans un réservoir de système, puis un traitement de conversion humide sur humide est effectué moins des surfaces en aluminium des composants métalliques, la valeur du pH de la solution de bain alcaline dans le prétraitement chimique par voie humide étant supérieure à 10 et l'alcalinité libre étant d'au moins 0,5 point, mais de moins de 50 points, la valeur maximale suivante de la concentration en zinc dissous dans la solution de bain alcaline du réservoir de système n'étant pas dépassée :

$$Zn_{max} = 0{,}0004 \times (pH - 9) \times [FA] + 0{,}6 \times [Y]$$

pH : valeur du pH
$Zn_{max}$ : valeur maximale de la concentration en zinc dissous en mmol/l
[FA] : alcalinité libre en mmol/l,
[Y] : concentration en mmol/1 d'agents complexants Y sous forme de phosphates condensés hydrosolubles calculée en tant que $P_2O_6$ et/ou forme de composés organiques hydrosolubles qui comportent au moins un groupe fonctionnel choisi parmi $COOX_{1/n}$, $-OPO_3X_{2/n}$ et/ou $-PO_3X_{2/n}$, X représente soit un atome d'hydrogène soit un atome de métal alcalin et/ou alcalino-terreux de valence n respective.

2. Procédé selon la revendication 1, **caractérisé en ce que** le traitement chimique par voie humide de surface des composants métalliques en série est effectué au moins pour un nombre de composants métalliques tel que l'aire totale en mètres carrés seulement des surfaces en zinc des composants métalliques est prétraitée chimiquement par voie humide avec la solution de bain alcaline du réservoir de système, laquelle aire est supérieure à l'expression suivante :

$$\frac{V_B \times Zn_{max} \times M_{Zn}}{\Delta m_{Zn}}$$

$V_B$: volume de bain en $m^3$
$Zn_{max}$ : concentration maximale en zinc dissous en mmol/l
$M_{Zn}$ : masse molaire du zinc en g/mol
$\Delta m_{Zn}$ : décapage à surface normée sur la base des surfaces de zinc des composants métalliques en $g/m^2$

3. Procédé selon l'une des revendications 1 et 2 ou les deux, **caractérisé en ce que** le dépassement de la valeur maximale $Zn_{max}$ dans le prétraitement chimique par voie humide est empêché par le fait que du zinc dissous est enlevé en continu ou en discontinu à partir de la solution de bain alcaline du réservoir de système, cela ne se produisant pas seul en raison du fait qu'au moins une partie de la solution de bain alcaline du réservoir de système contenant du zinc dissous est jetée et une autre partie d'une solution alcaline, qui contient uniquement les composants actifs de la solution de bain alcaline, est ajouté au réservoir de système.

4. Procédé selon l'une ou plusieurs des revendications précédentes, **caractérisé en ce que** le dépassement de la valeur maximale $Zn_{max}$ dans le prétraitement chimique par voie humide est empêché **en ce qu'**au moins une partie de la solution de bain alcaline du réservoir de système est mélangée à un composé hydrosoluble qui est une source d'ions sulfure, et **en ce qu'**une fraction de matières solides, apparaissant dans cette partie de la solution de bain alcaline est éventuellement séparée de la solution de bain alcaline.

5. Procédé selon la revendication 4, **caractérisé en ce que** la partie de la solution de bain alcaline du réservoir de système, qui est mélangée au composé hydrosoluble qui est une source d'ions sulfure, a une température d'au moins 40°C, mais de préférence de moins de 65°C.

6. Procédé selon l'une des revendications 4 et 5 ou les deux, **caractérisé en ce que** des volumes partiels sont retirés en continu de la solution de bain alcaline du réservoir de système, lesquels volumes partiels sont mélangés au composé hydrosoluble qui est une source d'ions sulfure, après quoi la fraction de matières solides, générée dans ces volumes partiels de la solution de bain alcaline, est séparée par filtration de la solution de bain alcaline puis le filtrat est ramené dans la solution de bain alcaline du réservoir de système.

7. Procédé selon la revendication 6, **caractérisé en ce que**, pour réduire l'excès de composés hydrosolubles qui sont une source d'ions sulfure, le filtrat est mélangé à un agent d'oxydation hydrosoluble, dont le potentiel de réduction standard est supérieur à +0,6 V (SHE), de préférence du peroxyde d'hydrogène, avant d'être ramené dans la solution de bain alcaline du réservoir de système.

8. Procédé selon l'une ou plusieurs des revendications précédentes, **caractérisé en ce que** la solution de bain alcaline du traitement chimique par voie humide comprend de l'aluminium dissous dans l'eau, la valeur maximale de 20 mmol/l, de préférence de 15 mmol/l, de la concentration en aluminium dissous dans la solution de bain alcaline du réservoir de système n'étant pas dépassée en raison du fait qu'au moins une partie de la solution de bain alcaline du réservoir de système est mélangé à un composé hydrosoluble qui est une source d'anions silicate, et qu'une fraction de matière solides générée dans cette partie de la solution de bain alcaline est éventuellement séparée par filtration de la solution de bain alcaline.

9. Procédé selon la revendication 8, dans lequel des volumes partiels sont retirés en continu de la solution de bain alcaline du réservoir de système, lesquels volumes partiels sont mélangés au composé hydrosoluble qui est une source d'anions silicate, après quoi la fraction de matières solides formée dans ces volumes partiels de la solution de bain alcaline est séparée sépare par filtration de la solution de bain alcaline, puis le filtrat est ramené à la solution de bain alcaline du réservoir de système.

10. Procédé selon l'une ou plusieurs des revendications précédentes, **caractérisé en ce que** le traitement de conversion qui fait suite au prétraitement chimique par voie humide est réalisé avec une composition aqueuse acide et la mise en contact avec celle est effectué pendant une durée telle que les surfaces en aluminium subissent un décapage de moins de 0,1 g/m$^2$.

11. Procédé selon l'une ou plusieurs des revendications précédentes, **caractérisé en ce que** le traitement de conversion qui fait suite au prétraitement chimique par voie humide est réalisé avec une composition acide aqueuse contenant des composés hydrosolubles des éléments Zr, Ti et/ou Si, et éventuellement des composés qui sont une source d'ions fluorure.

12. Procédé selon l'une ou plusieurs des revendications précédentes 3 à 11, **caractérisé en ce que** les composants métalliques sont prétraitées en construction mixte, dont les surfaces sont de préférence pour au moins 2% des surfaces en aluminium, la proportion de surface en zinc étant de préférence d'au moins 5%.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010001686
- EP 1051672 A